(19)

Europäisches
Patentamt
European
Patent Office
Office européen
des brevets

(11) **EP 3 454 347 A1**

(12) **EUROPEAN PATENT APPLICATION**
published in accordance with Art. 153(4) EPC

(43) Date of publication:
**13.03.2019 Bulletin 2019/11**

(21) Application number: **17792864.5**

(22) Date of filing: **01.05.2017**

(51) Int Cl.:
*H01F 1/44* (2006.01)          *H01F 1/147* (2006.01)
*H01F 1/20* (2006.01)          *G01N 15/02* (2006.01)

(86) International application number:
**PCT/KR2017/004627**

(87) International publication number:
**WO 2017/191962 (09.11.2017 Gazette 2017/45)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD**

(30) Priority: **04.05.2016 KR 20160055019**

(71) Applicant: CK Materials Lab Co., Ltd.
**Seoul 08380 (KR)**

(72) Inventors:
• **KIM, Hyoungjun**
  **Seoul 08380 (KR)**
• **SHIN, Euisup**
  **Guro-gu**
  **Seoul 08380 (KR)**
• **KIM, Joonsup**
  **Seoul 08380 (KR)**
• **CHOI, Minkyu**
  **Seoul 08380 (KR)**

(74) Representative: **Zardi, Marco**
  **M. Zardi & Co. SA**
  **Via Pioda 6**
  **6900 Lugano (CH)**

(54) **MAGNETORHEOLOGICAL FLUID WITH IMPROVED REDISPERSIBILITY AND METHOD FOR EVALUATING REDISPERSIBILITY OF MAGNETORHEOLOGICAL FLUID**

(57)    Disclosed are a magnetorheological fluid and a method for evaluating re-dispersibility of a magnetorheological fluid. According to the present invention, a magnetorheological fluid comprising magnetic particles, a dispersing medium, and an additive, wherein, when all solid components in the magnetorheological fluid are recovered to measure particle size distribution and to obtain a span value (span value) defined below: span value = $(D_{90} - D_{10}) / D_{50}$, wherein $D_{90}$, $D_{10}$ and $D_{50}$ respectively indicate particle sizes corresponding to 90 %, 10 %, and 50 % of the maximum value in a cumulative distribution of particle sizes of solid components, and the span value is 1.3 or more.

According to the present invention, a method for evaluating re-dispersibility of a magnetorheological fluid includes providing a transparent container containing a magnetorheological fluid; measuring an amount of light that pass through the transparent container by irradiating near-infrared rays while rotating the transparent container by a centrifuge (primary dispersion stability measurement); re-dispersing the centrifuged solid components into the dispersing medium by applying an external force to the magnetorheological fluid; and measuring an amount of light that pass through the transparent container by irradiating near-infrared rays while re-rotating the transparent container containing a magnetorheological fluid in which the solid components are re-dispersed by the centrifuge (secondary dispersion stability measurement).

【FIG. 1】

Providing transparent container
containing magnetorheological fluid

Measuring amount of light that pass through
transparent container by irradiating near-infrared rays
while rotating transparent container by centrifuge
(primary dispersion stability measurement)

Re-dispersing centrifuged solid components
into dispersing medium by applying external
force to magnetorheological fluid

Measuring amount of light that pass through transparent container
by irradiating near-infrared rays while rotating transparent
container containing magnetorheological fluid in which solid
components are re-dispersed by centrifuge
(secondary dispersion stability measurement)

EP 3 454 347 A1

## Description

### TECHNICAL FIELD

The present invention relates to a magnetorheological fluid, and more particularly to a magnetorheological fluid with improved re-dispersibility and a method for quantitatively evaluating re-dispersibility of the magnetorheological fluid.

### BACKGROUND OF THE DISCLOSURE

A magnetorheological fluid is a suspension obtained by mixing micro-sized magnetic particles such as iron powder, sensitive to a magnetic field, into a non-magnetic fluid such as oil or water, and is one of the smart materials that can control its flow characteristic in real time through application of an external magnetic field.

The magnetorheological fluid generally contains magnetic particles in a volume ratio of about 20 to 50 % and basically has a Newtonian fluid property. However, when an external magnetic field is applied, the magnetic particles move to form a chain structure in a direction parallel to the applied magnetic field, so that they have the property of a Bingham fluid having a resistance to shearing force and flow, and generating a constant yield stress without shear strain.

The magnetorheological fluid is used for damper, clutch, break, and so on by a characteristic of resistance against flow, and is used for polishing by a characteristic of shearing force.

It is necessary to have a high yield stress and to uniformly distribute magnetic particles of the magnetorheological fluid in a dispersing medium in order for the magnetorheological fluid to be effectively applied to various systems, and viscosity of the fluid and a remanent(residual) magnetization value need to be reduced to quickly recover to its original state when an electric field is applied and removed.

However, a density of the magnetic particles (e.,g.,7.86g /cm$^3$ in the case of iron powder) constituting the magnetorheological fluid is much greater than that of the dispersing medium (e.,g., 0.95g/cm$^3$ in the case of silicone oil). Therefore, immediately after the preparation of the magnetorheological fluid, even though the dispersibility is excellent, the precipitation of internal solid components may not be completely prevented over time. For this reason, it is very important to ensure re-dispersibility, which is a characteristic that precipitated solid components are re-dispersed in the dispersing medium for use in devices such as a linear type damper.

According to US Patent Registration No. 6,203,717 B1 (US 6203717 B1) as a conventional art, a magnetorheological fluid is prepared by changing a content of magnetic particles, a type of dispersing medium (carrier fluid; oil), an additive, clay, etc. to improve re-dispersibility and is subjected to heat curing treatment, and then a compressive strength thereof is measured to evaluate the re-dispersibility by the magnitude of a force applied to a load cell.

However, since US 6203717 B1 measures a compressive strength of a thermally cured, i.e., primary processed fluid instead of the re-dispersibility of the magnetorheological fluid itself, so as to evaluate the re-dispersibility of the magnetorheological fluid, it is difficult to see that the precipitated solid components are re-dispersed in the fluid, or that the direct redistribution of the magnetorheological fluid itself is evaluated.

In addition, since the type of dispersing medium, the additive, the clay, etc., as well as the content of magnetic particles are set as variables at the same time, it is difficult to grasp factors that affect re-dispersibility improvement.

According to US Patent Registration No. 7,297,290 B2 (US 7297290B2) as another conventional art, a size of the magnetic particles is reduced to a nano level to facilitate the improvement of the re-dispersibility of the magnetorheological fluid, and a tester uses a spatula test which is a method of evaluating the re-dispersibility of the magnetorheological fluid by directly applying a force to the precipitate using a spatula, and thus a quantified result cannot be obtained and the reliability of the result is not high.

Therefore, the method for evaluating the re-dispersibility of the magnetorheological fluid proposed so far has a problem that it may be only qualitative or the reliability may not be secured in the result.

### DISCLOSURE

### TECHNICAL PROBLEMS

The present invention, which is contrived to improve re-dispersibility of a magnetorheological fluid and to solve the aforementioned problems such as reliability of an evaluation method, provides a method of quantitatively evaluating re-dispersibility, which is one of the important characteristics of the magnetorheological fluid, a clear criterion for improving re-dispersibility based on the method, and a magnetorheological fluid prepared thereby.

### TECHNICAL SOLUTION

A magnetorheological fluid according to an exemplary embodiment of the present invention includes magnetic particles, a dispersing medium, and an additive, wherein, when all solid components in the magnetorheological fluid are recovered to measure particle size distribution and to obtain a span value defined below: span value = $(D_{90} - D_{10}) / D_{50}$, wherein $D_{90}$, $D_{10}$ and $D_{50}$ respectively indicate particle sizes corresponding to 90 %, 10 %, and 50 % of the maximum value in a cumulative distribution of particle sizes of solid components, and the span value is 1.3 or more.

In addition, according to an exemplary embodiment of the present invention, in a magnetorheological fluid including magnetic particles, a dispersing medium and an additive, when a $D_{90}/D_{10}$ is obtained by measuring the particle size distribution after all solid components in the magnetorheological are covered, the $D_{90}/D_{10}$ is 3 or more, and in this case, $D_{90}$ and $D_{10}$ respectively indicate particle sizes corresponding to 90 % and 10 % of the maximum value in a cumulative distribution of particle sizes of the solid components.

All solid components in the magnetorheological fluid may be 20 to 50 volume percent (vol%) of the magnetorheological fluids, and the additive is 1 to 30 volume percentage (vol%).

The magnetic particles may be selected from the group consisting of iron, nickel, cobalt, iron-cobalt alloys, iron-aluminum alloys, iron-silicon alloys, iron-nickel alloys, iron-vanadium alloys, iron-manganese alloy, iron-copper alloys, carbonyl iron, a chromium dioxide, stainless steel, silicon steel, manganese-zinc ferrite, a chromium oxide, an iron nitride, an iron oxide, iron carbide, ferrite-polymer, nickel-zinc ferrite, ferrite ($Fe_3O_4$), and mixtures thereof.

The dispersion medium may be at least one selected from the group consisting of water, ethanol, silicone oil, petrolatum, vacuum oil, castor oil, hydraulic oil, lubricant oil, saturated hydrocarbon oil, unsaturated hydrocarbon oil, synthetic hydrocarbon oil, cycloparaffin oil, ethylene glycol, ethylene glycol ether, propylene glycol, octanol, machine oil, poly alpha olefins(PAO), transformer oil, a transformer-insulating solution, halocarbon oil, paraffin oil, mineral oil, olive oil, corn oil, soybean oil, vegetable oil, and a mixture thereof.

The additive may be at least one selected from the group consisting of chemical additives, metal oxides, organic clays, and inorganic clays which are used for the purposes of dispersion stability, thixotropy, abrasion resistance, chemical stability, oxidation resistance, and the like in the magnetorheological fluid.

According to another exemplary embodiment of the present invention, a method for evaluating re-dispersibility of a magnetorheological fluid includes measuring primary dispersion stability of the magnetorheological fluid using infrared rays; performing re-dispersion by applying an external force to the magnetorheological fluid; measuring secondary dispersion stability of the magnetorheological fluid using infrared rays; and comparing a primary dispersion stability measurement value with a secondary dispersion stability measurement value.

According to another exemplary embodiment of the present invention, a method for evaluating re-dispersibility of a magnetorheological fluid includes providing a transparent container containing a magnetorheological fluid; measuring an amount of light that pass through the transparent container by irradiating near-infrared rays while rotating the transparent container by a centrifuge (primary dispersion stability measurement); re-dispersing the centrifuged solid components into the dispersing medium by applying an external force to the magnetorheological fluid; and measuring an amount of light that pass through the transparent container by irradiating near-infrared rays while re-rotating the transparent container containing a magnetorheological fluid in which the solid components are re-dispersed by the centrifuge (secondary dispersion stability measurement).

The measurement values of the primary and secondary dispersion stability may be represented as respective instability indexes.

The measurement of the amount of light may be performed by measuring 999 transmission profiles at intervals of 150 seconds with respect to near infrared rays irradiated in a state where the rotation speed of the centrifuge is 4,000 rpm.

**ADVANTAGEOUS EFFECT**

According to the exemplary embodiments of the present invention, it is possible to provide a measuring method capable of quantifying and evaluating the re-dispersibility of a magnetorheological fluid by itself, thereby providing a magnetorheological fluid with improved re-dispersibility through the method and also providing a clear criterion for a factor that affects the re-dispersibility.

In addition, by providing a re-dispersibility evaluation method which can quantitatively evaluate the re-dispersibility of the magnetorheological fluid, a method for rapidly and reliably re-dispersing the magnetorheological fluid in the field of manufacturing and application of the magnetorheological fluid may be extended.

In accordance with the re-dispersibility evaluation method according to the exemplary embodiments of the present invention, it is possible to measure re-dispersibility characteristics of the magnetorheological fluid depending on all the solid components including organic and inorganic additives used for improving characteristics of the magnetorheological fluid and as well as magnetic particles included in the magnetorheological fluid.

In addition, the magnetorheological fluid with improved re-dispersibility according to the exemplary embodiment of the present invention may be extended to a variety of fields such as various linear-type dampers and rotary-type dampers which are applied to passenger and commercial vehicles, railway vehicles, and two-wheel vehicles, various dampers used in shock absorbers in the military industry, earthquake-proof dampers in bridges and buildings, and vibration control dampers in household appliances.

## BRIEF DESCRIPTION OF THE DRAWINGS

FIG. 1 illustrates a flow chart for a method for evaluating the re-dispersibility of a magnetorheological fluid by an exemplary embodiment of the present invention.

FIG. 2 illustrates a schematic view of a profile used in calculating instability index of a magnetorheological fluid according to an exemplary embodiment of the present invention.

FIG. 3 is a graph showing results of primary dispersion stability measurement on samples in the evaluation of re-dispersibility of a magnetorheological fluid according to an exemplary embodiment of the present invention.

FIG. 4 is a graph showing results of secondary dispersion stability measurement on samples in the evaluation of re-dispersibility of a magnetorheological fluid according to an exemplary embodiment of the present invention.

FIG. 5 is a graph showing a relationship between a span value and a variation ratio of the instability index of a primary dispersion stability measurement result and a secondary dispersion stability measurement in the evaluation of re-dispersibility of a magnetorheological fluid according to an exemplary embodiment of the present invention .

FIG. 6 is a graph showing a relationship between $D_{90}/D_{10}$ and a variation ratio of the instability index of a primary dispersion stability measurement result and a secondary dispersion stability measurement in the evaluation of re-dispersibility of a magnetorheological fluid according to an exemplary embodiment of the present invention.

## DETAILED DESCRIPTION OF THE INVENTION

Advantageous features of the present invention and the method of accomplishing the advantageous features will be apparent with reference to the embodiments which are described below in detail in connection with the accompanying drawings. However, the present invention is not limited to the embodiments and may be embodied in various other forms or examples. These embodiments are provided so that this disclosure will be thorough and complete, and will fully convey the scope of the present invention to those skilled in the art. The scope of the present invention is defined in the appended claims. It should be noted that like reference numerals are given to like components at any parts in the description and the drawings.

Hereinafter, a magnetorheological fluid according to an exemplary embodiment of the present invention will be described.

According to an exemplary embodiment of the present invention, in a magnetorheological fluid including magnetic particles, a dispersing medium and an additive, a span value of all solid components in the magnetorheological fluid is defined as follows when a particle size is measured by recovering all the solid components in the magnetorheological fluid and the span value is defined as follows, the span value is 1.3 or more.

$$\text{span value} = (D_{90} - D_{10}) / D_{50},$$

Herein, $D_{90}$, $D_{10}$ and $D_{50}$ respectively indicate particle sizes corresponding to 90 %, 10 %, and 50 % of the maximum value in a cumulative distribution of particle sizes of solid components.

In general, even when precipitation stability is ensured after the magnetorheological fluid is prepared, solid components (such as magnetic particles and additives) are precipitated over time, and accordingly, it is very important to secure re-dispersibility in order to use it in a device such as a linear type of damper.

The re-dispersibility indicates a characteristic that solid components that have been precipitated or separated under the action of gravity or a centrifugal force and then return to a state before precipitation or separation by an external force applied.

In the case of the conventional art, evaluation performed by measuring re-dispersibility of a fluid that is primarily processed by thermally curing the magnetorheological fluid instead of the magnetorheological fluid itself to measure the re-dispersibility of the magnetorheological fluid is difficult to see as a way of evaluating re-dispersibility of the precipitated solid components in the magnetorheological fluid or as a way of directly evaluating the re-dispersibility of the magnetorheological fluid itself.

In other words, the re-dispersibility of the magnetorheological fluid is obviously affected not only by magnetic particles but also by other solid components in the fluid, but the evaluation based on all the solid components such as magnetic particles and organic and inorganic additives contained in the magnetorheological fluid was hardly carried out until now.

Accordingly, the present invention has devised a magnetorheological fluid having improved re-dispersibility based on the evaluation of the magnetorheological fluid prepared by varying the size of all the solid components (including magnetic particles, surface-modified magnetic particles, various organic and inorganic additives, etc.) and the width of the particle size distribution.

More specifically, in the present invention, a fluid was prepared in consideration of D10, D50, D90 and a span value of all the solid components contained in a magnetorheological fluid in order to improve the re-dispersibility of the magnetorheological fluid.

The span value is used as a method of obtaining a width of particle size distribution of solid components, and is based on chemical additives such as an anti-precipitation agent, a thixotropic agent, an anti-abrasion agent, and an antioxidant, and organic and inorganic additives, which may affect the particle size distribution as well as magnetic particles.

In the present invention, it may be preferable that the span value of the magnetorheological fluid is at least 1.3 or more so as to have good re-dispersibility

When the span value is less than 1.3, re-dispersibility is remarkably deteriorated.

In addition, according to an exemplary embodiment of the present invention, in a magnetorheological fluid with improved re-dispersibility, including magnetic particles, a dispersing medium and an additive, When a $D_{90}/D_{10}$ is obtained by measuring the particle size distribution after all solid components in the magnetorheological are covered, the $D_{90}/D_{10}$ is 3 or more, and in this case, $D_{90}$ and $D_{10}$ respectively indicate particle sizes corresponding to 90 % and 10 % of the maximum value in a cumulative distribution of particle sizes of the solid components.

In addition, in magnetorheological fluids according to an exemplary embodiment of the present invention, all solid components in the magnetorheological fluid are 20 to 50 volume percent (vol%) of the magnetorheological fluids, and the additive is 1 to 30 volume percentage (vol%).

In the present invention, not only the magnetic particles but also all the solid components including all the additives added to the magnetorheological fluid are used as criteria for the evaluation of re-dispersibility, so that original re-dispersibility of the magnetorheological fluids themselves caused by organic and inorganic additives as well as he magnetic particles, the surface-modified magnetic particles included in the actual dispersion medium can be taken into consideration.

The magnetic particles may be selected from the group consisting of iron, nickel, cobalt, iron-cobalt alloys, iron-aluminum alloys, iron-silicon alloys, iron-nickel alloys, iron-vanadium alloys, iron-manganese alloy, iron-copper alloys, carbonyl iron, a chromium dioxide, stainless steel, silicon steel, manganese-zinc ferrite, a chromium oxide, an iron nitride, an iron oxide, iron carbide, ferrite-polymer, nickel-zinc ferrite, ferrite ($Fe_3O_4$), and mixtures thereof.

In the present invention, metal powders such as powders of iron (Fe), nickel (Ni), cobalt (Co) and carbonyl iron having a large saturation magnetization may be preferably used as magnetic particles, and most of such metal powders have a spherical shape.

In addition, metal oxide particles with a relatively small particle size and a low density may be used to ensure the precipitation stability of the magnetorheological fluid. These metal oxide particles have relatively low saturation magnetization.

The magnetic particles used in the magnetorheological fluid may include a mixture of two or more materials with different particle sizes and properties.

The dispersion medium may be at least one selected from the group consisting of water, ethanol, silicone oil, petrolatum, vacuum oil, castor oil, hydraulic oil, lubricant oil, saturated hydrocarbon oil, unsaturated hydrocarbon oil, synthetic hydrocarbon oil, cycloparaffin oil, ethylene glycol, ethylene glycol ether, propylene glycol, octanol, machine oil, poly alpha olefins(PAO), transformer oil, a transformer-insulating solution, halocarbon oil, paraffin oil, mineral oil, olive oil, corn oil, soybean oil, vegetable oil, and a mixture thereof.

In addition, the additive may be at least one selected from the group consisting of chemical additives, metal oxides, organic clays, and inorganic clays which are used for the purposes of dispersion stability, thixotropy, abrasion resistance, chemical stability, oxidation resistance, and the like in the magnetorheological fluid.

Thus, all the solid components of the magnetorheological fluid may contain organic or inorganic clay as well as magnetic particles.

Specifically, the additive includes inorganic clay, a dispersant, a surfactant, an anti-corrosive agent, a lubricant, an anti-wear additive, an antioxidant, a thixotropic agent, and a conventional suspension agent.

As the inorganic clay, bentonite, hectorite, montmorillonite or similar inorganic clay having a lamina structure and a polar surface is used.

The dispersant includes a compound such as oleic acid, fatty acid metal soap, polyalcohol, ammonium salt, fatty acid, polyethylene oxide, phosphate, and phosphonate and a mixture thereof.

The surfactant includes sulfonates, phosphate esters, stearic acid, glycerol monooleate, sorbitan sesquioleate, laurates, fatty acids, fatty alcohols, fluoroaliphatic polymeric esters, titanates, aluminate, zirconate coupling agents, and other surfactants (surface active agents). The surfactant further includes polyalkenediol and partially esterified polyols.

The anti-corrosive agent include sodium nitrite, sodium nitrate, sodium benzoate, borax, ethanolamine phosphate, and a mixture thereof, and A compound such as sulfidemolybdenum, zincphosphate, trianylphosphate, triphenylphosphorothionate and aminephosphate or a mixture thereof is used as the anti-wear additive.

According to another exemplary embodiment of the present invention, a method for evaluating re-dispersibility of a magnetorheological fluid includes measuring primary dispersion stability of the magnetorheological fluid using infrared rays; performing re-dispersion by applying an external force to the magnetorheological fluid; measuring secondary dispersion stability of the magnetorheological fluid using infrared rays; and comparing a primary dispersion stability measurement value with a secondary dispersion stability measurement value.

The dispersion stability of the magnetorheological fluid is measured by dividing the dispersion stability of the magnetorheological fluid by two times using infrared rays in order to evaluate the re-dispersibility of the magnetorheological fluid in the present exemplary embodiment, and it is possible to quantitatively evaluate the re-dispersibility of the magnetorheological fluid by sequentially measuring the primary dispersion stability, performing the re-dispersion by applying an external force to the magnetorheological fluid, measuring the secondary dispersion stability, and comparing the primary and secondary dispersion stability measurement values.

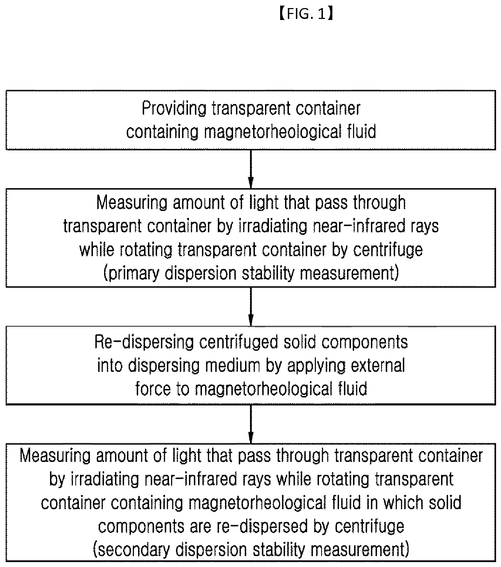

As illustrated in FIG. 1, according to another exemplary embodiment of the present invention, a method for evaluating re-dispersibility of a magnetorheological fluid includes providing a transparent container containing a magnetorheological fluid; measuring an amount of light that pass through the transparent container by irradiating near-infrared rays while rotating the transparent container by a centrifuge (primary dispersion stability measurement); re-dispersing the centrifuged solid components into the dispersing medium by applying an external force to the magnetorheological fluid; and measuring an amount of light that pass through the transparent container by irradiating near-infrared rays while re-rotating the transparent container containing a magnetorheological fluid in which the solid components are re-dispersed by the centrifuge (secondary dispersion stability measurement).

The magnetorheological fluid was prepared by fixing solid components (such as magnetic particles, surface-modified magnetic particles, and additives) to have a same weight and varying the D10, D50, D90 and the span value of the solid components.

As described above, the magnetorheological fluid prepared by fixing the solid components at the constant weight, and varying the particle size of the solid components and the width of the particle size distribution is charged in a container (in which light of a certain wavelength can be transmitted).

The magnetorheological fluid is separated into the dispersing medium and solid components while the transparent container charged with the magnetorheological fluid is mounted on a centrifuge, and light (amount of light) passing through the transparent container is detected by irradiating the light to the transparent container while the solid components are separated by a centrifugal force.

In this case, it may be preferable that an amount of light passing through the dispersing medium is 40 % more, and this is because an instability index value is lower when the transmittance of the dispersing medium is less than 40%

Particularly, when particles are not precipitated or dark colored oil is used, a transmittance of less than 40% may appear.

The light detection is performed by disposing a light detecting sensor at a position opposite to the light irradiation point, that is, at a point symmetrical with the light irradiation point about the transparent container.

Then, an external force is applied to the precipitated solid component so that re-dispersing is performed on the dispersion medium.

A vibration exciter capable of rapid energy transfer may be preferably used to apply an external force to the solid components, and a vortex mixer may be preferably used as such a vibration exciter.

The re-dispersibility indicates a characteristic that solid components that have been precipitated or separated from the dispersing medium under the action of gravity or a centrifugal force and then return to a state before separation by an external force applied to the solid components.

The transparent container containing the re-dispersed magnetorheological fluid is rotated again in the above centrifuge to centrifuge the magnetorheological fluid and simultaneously detect the transmission light by irradiating the same light.

The light used in the irradiation of the light may be preferably near-infrared rays.

The re-dispersibility of the magnetorheological fluid may be evaluated by comparing a measurement value of the primary dispersion stability based on an amount of first transmission light with a measurement value of the secondary dispersion stability based on an amount of second transmission light.

For the dispersion stability, the term "dispersion" indicates floating of a first material in a state of fine particles in a second material, and a characteristic that maintains this state is called dispersion stability.

The measurement values of the primary and secondary dispersion stability may be represented as respective instability indexes.

The instability index indicating the dispersion stability shows that the dispersion stability is excellent when the value is closer to 0, and the dispersion stability is worse when the value is closer to 1.

The instability index should be equal to or greater than 0.3. In the case of having the instability index that is less than 0, the magnetorheological fluids has a high viscosity and a high concentration, or a formula to calculate is different ("n" setting is different), or measurement range setting is different. Accordingly, differences in instability index values before and after re-dispersion may appear differently. Therefore, it may be preferable that the primary dispersion stability and the secondary dispersion stability are calculated by setting a same calculation method.

$$\text{Instability index} = \frac{(\text{Area of profile}_n - \text{Area of profile}_{first})}{(\text{Area of profile}_{last} - \text{Area of profile}_{first})}$$

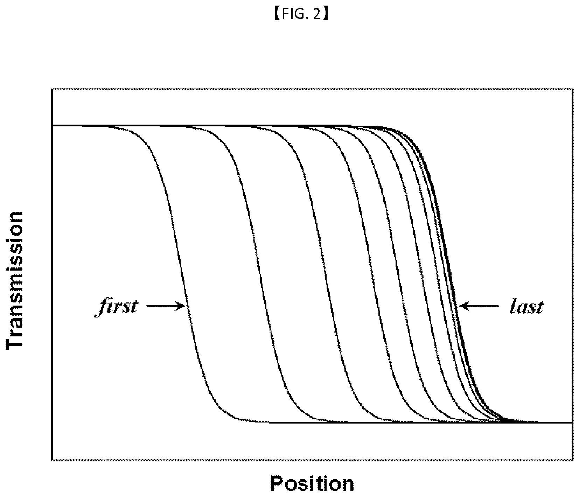

FIG. 2 illustrates a schematic view of a profile. A position of the horizontal axis (x-axis) indicates a position in the transparent container for centrifugal separation, and a position toward the right indicates the outer side of the transparent container. In other words, it indicates a side at which a precipitation layer accumulates. Transmission of the vertical axis (y-axis) indicates that light is detected by transmitting near-infrared rays through a transparent container containing a fluid. As centrifugation proceeds (as precipitation proceeds), the profile gradually moves from the first to the last. In this case, "n" represents the number of profiles.

The measurement of the amount of light is performed by measuring 999 transmission profiles at intervals of 150 seconds with respect to near infrared rays irradiated in a state where the rotation speed of the centrifuge is 4,000 rpm.

Hereinafter, a method for evaluating re-dispersibility of a magnetorheological fluid according to an example of the present invention will be described in detail. The following examples are illustrative of the present invention and are not intended to limit the scope of the present invention.

<Example>

All of the solid components of the magnetorheological fluid were fixed to a same weight, and then magnetorheological fluids were prepared by combining the D10, D50, D90 and span values of the solid components in various ways.

Next, all the solid components contained in the magnetorheological fluids were recovered and washed using a centrifuge, and D10, D50, D90 and span values were obtained using a particle size analyzer as shown in Table 1 below.

(Table 1)

| <Particle size distribution of solid components included in magnetorheological fluids> | | | | | |
|---|---|---|---|---|---|
| Example | $D_{10}(\mu m)$ | $D_{50}(\mu m)$ | $D_{90}(\mu m)$ | $D_{90}/D_{10}$ | Span value |
| No 1 (#1) | 1.884 | 6.490 | 15.520 | 8.238 | 2.008 |
| No 2 (#2) | 1.952 | 4.260 | 7.810 | 4.001 | 1.375 |
| No 3 (#3) | 4.470 | 8.050 | 16.220 | 3.629 | 1.460 |
| No 4 (#4) | 2.831 | 4.160 | 6.680 | 2.360 | 0.925 |
| No 5 (#5) | 3.980 | 5.560 | 8.550 | 2.148 | 0.822 |
| No 6 (#6) | 6.000 | 9.470 | 16.540 | 2.757 | 1.113 |
| No 7 (#7) | 3.330 | 5.260 | 8.700 | 2.613 | 1.021 |
| No 8 (#8) | 2.537 | 6.820 | 16.180 | 6.378 | 2.000 |
| No 9 (#9) | 3.940 | 6.650 | 12.710 | 3.226 | 1.319 |
| No 10 (#10) | 2.319 | 5.580 | 11.170 | 4.817 | 1.586 |

An ultrasonic treatment of the particle size analyzer should be performed within 5 minutes. Water and ethanol were used as the dispersing medium for particle size analysis.

In the present invention, the dispersion stability before and after re-dispersion was measured and compared according to the difference in solid component size and span value in the magnetorheological fluid by using a method of measuring the dispersion stability of the magnetorheological fluid as the method for evaluating the re-dispersibility of the magnetorheological fluid.

For the measurement of dispersion stability, LUMi series of LUM GmbH (Germany) was used, and the dispersion stability was measured faster by measuring the dispersion stability by checking a real-time precipitation degree of solid components while centrifuging.

For measurement of the dispersion stability, centrifugation was carried out while rotating at a speed of 4000 rpm, and near infrared rays were irradiated to the sample and 999 transmission profiles were measured at an interval of 150 seconds.

The re-dispersibility was evaluated by measuring the dispersion stability before and after re-dispersion as described above and comparing the $D_{10}$, $D_{50}$, $D_{90}$, and span values of the solid components of the magnetorheological fluid by calculating the dispersion stability difference

In the results of the dispersion stability measurement, the dispersion stability is excellent when the value is closer to 0, and the dispersion stability is worse when the value is closer to 1. This instability index is a numerical indicator of dispersion stability.

The solid components precipitated in the magnetorheological fluid by rotation of the centrifuge were re-dispersed on all the samples using the vortex mixer for the same time (10 minutes) under the same conditions.

The re-dispersed magnetorheological fluid was subjected to light irradiation while conducting the centrifugation under the same method (conditions) as above, and the amount of transmitted light was measured.

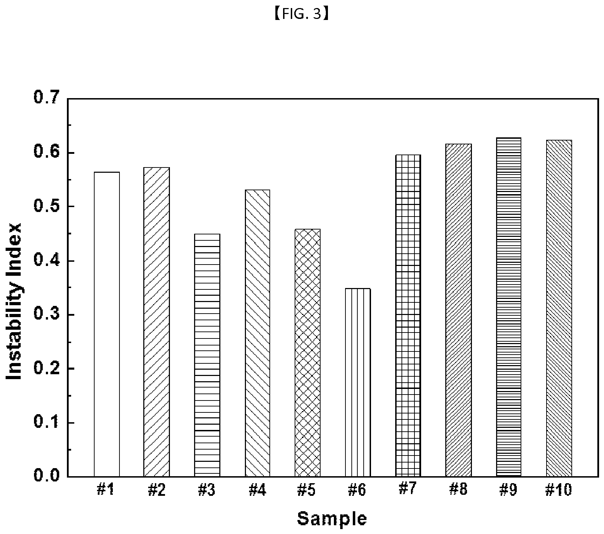

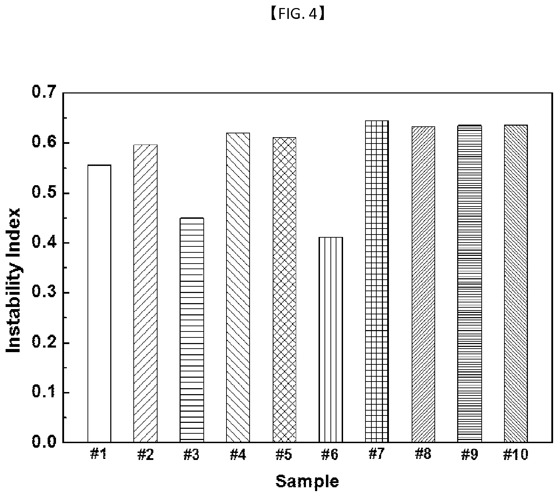

FIG. 3 and FIG. 4 illustrate results of instability index before and after re-dispersion for each magnetorheological fluid.

Such results may be used as an indicator of the re-dispersibility of each of the magnetorheological fluids by comparing the change in instability index before and after re-dispersion of FIG. 3 and FIG. 4.

Referring to FIG. 3 and FIG. 4, in a relationship between the span value and a variation ratio of the instability index before and after the re-dispersion, when the span value is 1.3 or more, the variation ratio of the instability index before and after the re-dispersion is 4.01 %, which is lower than 5 %, and the instability index sharply increases to 8,22 % or more for a sample having the span value of less than 1.3.

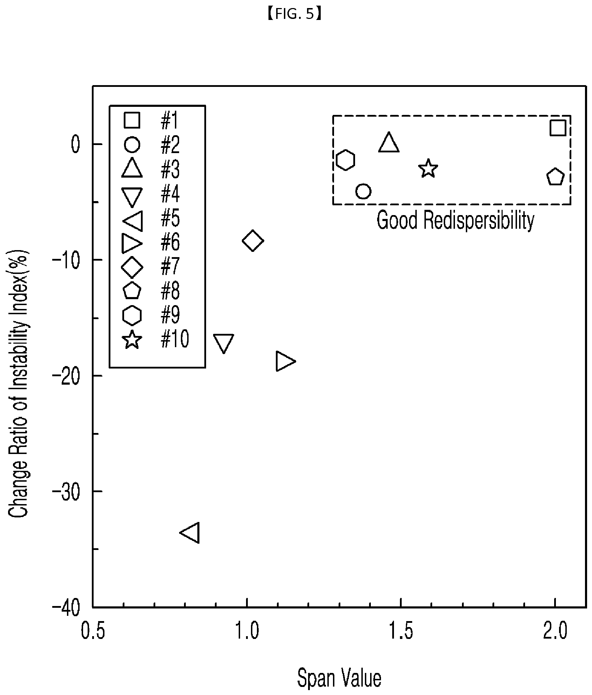

FIG. 5 is a graph illustrating a relationship between the span value and a variation ratio of the instability index before and after the re-dispersion according to measurements of the primary and secondary dispersion stability. In this case, a dotted line shows the good re-dispersibility of the sample.

The increase in the instability index indicates that the precipitated solid components exhibit different re-dispersibility in the same dispersion condition and are not completely re-dispersed and remain coagulated or precipitated.

Therefore, according to the test results of the present invention, it is seen that the re-dispersion is performed well when the width of the particle size distribution of the solid particles in the magnetorheological fluid is wide, that is, when the span value is 1.3 or more.

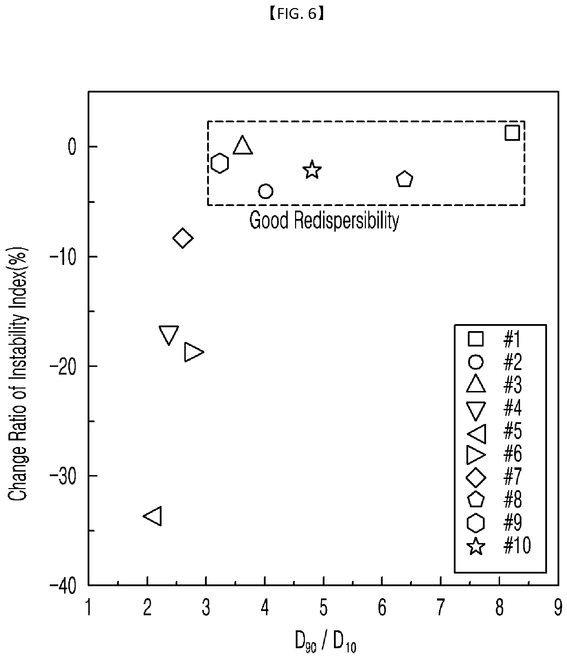

FIG. 6 is a graph illustrating a relationship between the $D_{90}/D_{10}$ and a variation ratio of the instability index before and after the re-dispersion according to measurements of the primary and secondary dispersion stability. In this case, a dotted line shows the good re-dispersibility of the sample.

As illustrated in FIG. 6, when the $D_{90}/D_{10}$ is 3 or more, the variation ratio of the instability index before and after the re-dispersion is 4.01 %, which is lower than 5 %, and the instability index sharply increases to 8,22 % or more for a sample having the $D_{90}/D_{10}$ of less than 3.

In summary, the re-dispersibility of the magnetorheological fluid is greatly improved when the D90/D10 is 3 or more.

A method for evaluating the re-dispersibility disclosed by conventional art include a method of measuring a compressive strength after thermally curing the magnetorheological fluid, a method of manually measuring rotational resistance of the spatula, a method of measuring a volume of the remainder in a bottle after vigorously shaking the magnetorheological fluid and draining the dispersing medium, and the like, but such methods are difficult to quantify the re-dispersion result, and it is inevitable that an individual error occurs in the person performing the test.

In the present invention, the dispersion stability of the magnetorheological fluid is measured, and the dispersion stability before and after re-dispersion according to the difference in the size, span value, and width of the particle size distribution for all solid components in the magnetorheological fluid is measured and compared with each other.

Furthermore, it may be used as a standard for quantitatively evaluating the re-dispersibility of magnetorheological fluid based on the re-dispersibility measurement method of the present invention.

The above descriptions are provided for illustrative purposes of the technical concepts of the present invention, and a person having ordinary skill in the art may understand that various other modifications or equivalents are possible without departing from the natural characteristics of the present invention

Accordingly, the technical scope of the present invention should be construed broadly within the technical spirit as defined in the appended claims.

**Claims**

1. A magnetorheological fluid comprising magnetic particles, a dispersing medium, and an additive, wherein, when all solid components in the magnetorheological fluid are recovered to measure particle size distribution and to obtain a span value (span value) defined below:

$$\text{span value} = (D_{90} - D_{10}) / D_{50},$$

wherein $D_{90}$, $D_{10}$ and $D_{50}$ respectively indicate particle sizes corresponding to 90 %, 10 %, and 50 % of the maximum value in a cumulative distribution of particle sizes of solid components, and the span value is 1.3 or more.

2. A magnetorheological fluid comprising magnetic particles, a dispersing medium, and an additive, wherein, when a value of $D_{90} / D_{10}$ all solid components in the magnetorheological fluid are recovered and the is obtained by measuring the particle size distribution, $D_{90}$ and $D_{10}$ respectively indicate particle sizes corresponding to 90 % and 10 % of the maximum value in a cumulative distribution of particle sizes of solid components, and the $D_{90} / D_{10}$ is greater than or equal to 3.

3. The magnetorheological fluid of claim 1 or claim 2, wherein all the solid components in the magnetorheological fluid are 20 to 50 volume percent (vol%) of the magnetorheological fluid, and the additive is 1 to 30 volume percent (vol%) of the magnetic particles.

4. The magnetorheological fluid of claim 1 or claim 2, wherein the magnetic particles are selected from the group consisting of iron, nickel, cobalt, iron-cobalt alloys, iron-aluminum alloys, iron-silicon alloys, iron-nickel alloys, iron-vanadium alloys, iron-molybdenum alloy, iron-chromium alloy, iron-tungsten alloy, iron-manganese alloy, iron-copper alloys, carbonyl iron, a chromium dioxide, stainless steel, silicon steel, manganese-zinc ferrite, a chromium oxide, an iron nitride, an iron oxide, iron carbide, ferrite-polymer, nickel-iron ferrite, ferrite ($Fe_3O_4$), and mixtures thereof.

5. The magnetorheological fluid of claim 1 or claim 2, wherein the dispersion medium is at least one selected from the group consisting of water, ethanol, silicone oil, petrolatum, vacuum oil, castor oil, hydraulic oil, lubricant oil, saturated hydrocarbon oil, unsaturated hydrocarbon oil, synthetic hydrocarbon oil, cycloparaffin oil, ethylene glycol, ethylene glycol ether, propylene glycol, octanol, machine oil, poly alpha olefins(PAO), transformer oil, a transformer-insulating solution, halocarbon oil, paraffin oil, mineral oil, olive oil, corn oil, soybean oil, vegetable oil, and a mixture thereof.

6. The magnetorheological fluid of claim 1 or claim 2, the additive may be at least one selected from the group consisting of chemical additives, metal oxides, organic clays, and inorganic clays which are used for the purposes of dispersion stability, thixotropy, abrasion resistance, chemical stability, oxidation resistance, and the like in the magnetorheological fluid.

7. A method for evaluating re-dispersibility of a magnetorheological fluid, the method comprising steps of:

measuring primary dispersion stability of the magnetorheological fluid using infrared rays;
performing re-dispersion by applying an external force to the magnetorheological fluid;
measuring secondary dispersion stability of the magnetorheological fluid using infrared rays; and
comparing a primary dispersion stability measurement value with a secondary dispersion stability measurement value.

8. A method for evaluating re-dispersibility of a magneto rheological fluid, the method comprising steps of:

providing a transparent container containing a magnetorheological fluid;
measuring an amount of light that pass through the transparent container by irradiating near-infrared rays while rotating the transparent container by a centrifuge (primary dispersion stability measurement);
re-dispersing the centrifuged solid components into the dispersing medium by applying an external force to the magnetorheological fluid; and
measuring an amount of light that pass through the transparent container by irradiating near-infrared rays while re-rotating the transparent container containing a magnetorheological fluid in which the solid components are re-dispersed by the centrifuge (secondary dispersion stability measurement).

9. The method of claim 7 or claim 8, wherein:

The measurement values of the first and second dispersion stability are represented by respective instability indexes.

10. The method of claim 8, wherein
The measurement of the amount of light is performed by measuring 999 transmission profiles at intervals of 150 seconds with respect to near infrared rays irradiated in a state where the rotation speed of the centrifuge is 4,000 rpm.

【FIG. 1】

```
┌─────────────────────────────────────────────────────┐
│              Providing transparent container          │
│          containing magnetorheological fluid          │
└─────────────────────────────────────────────────────┘
                          │
                          ▼
┌─────────────────────────────────────────────────────┐
│          Measuring amount of light that pass through  │
│     transparent container by irradiating near-infrared rays │
│       while rotating transparent container by centrifuge │
│          (primary dispersion stability measurement)   │
└─────────────────────────────────────────────────────┘
                          │
                          ▼
┌─────────────────────────────────────────────────────┐
│          Re-dispersing centrifuged solid components   │
│            into dispersing medium by applying external │
│              force to magnetorheological fluid         │
└─────────────────────────────────────────────────────┘
                          │
                          ▼
┌─────────────────────────────────────────────────────┐
│   Measuring amount of light that pass through transparent container │
│      by irradiating near-infrared rays while rotating transparent │
│     container containing magnetorheological fluid in which solid │
│           components are re-dispersed by centrifuge    │
│          (secondary dispersion stability measurement) │
└─────────────────────────────────────────────────────┘
```

【FIG. 2】

【FIG. 3】

【FIG. 4】

【FIG. 5】

【FIG. 6】

## INTERNATIONAL SEARCH REPORT

| | International application No. |
|---|---|
| | **PCT/KR2017/004627** |

**A. CLASSIFICATION OF SUBJECT MATTER**

*H01F 1/44(2006.01)i, H01F 1/147(2006.01)i, H01F 1/20(2006.01)i, G01N 15/02(2006.01)i*

According to International Patent Classification (IPC) or to both national classification and IPC

**B. FIELDS SEARCHED**

Minimum documentation searched (classification system followed by classification symbols)
H01F 1/44; H01F 1/28; H01F 1/34; C01G 49/00; H01F 1/147; H01F 1/20; G01N 15/02

Documentation searched other than minimum documentation to the extent that such documents are included in the fields searched
Korean Utility models and applications for Utility models: IPC as above
Japanese Utility models and applications for Utility models: IPC as above

Electronic data base consulted during the international search (name of data base and, where practicable, search terms used)
eKOMPASS (KIPO internal) & Keywords: magneto-rheological, MR fluid, span, diameter, particle size, solid content, magnetic particle, redistribution, additive, infrared ray, centrifugation, dispersant

**C. DOCUMENTS CONSIDERED TO BE RELEVANT**

| Category* | Citation of document, with indication, where appropriate, of the relevant passages | Relevant to claim No. |
|---|---|---|
| Y | KR 10-2008-0079472 A (SMARTRONIX CO., LTD.) 01 September 2008<br>See paragraphs [0007], [0021]-[0025], [0031] and claim 1. | 1-6 |
| A | | 7-10 |
| Y | KR 10-2008-0112703 A (SMARTRONIX CO., LTD.) 26 December 2008<br>See paragraphs [0018], [0023] and claim 1. | 1-6 |
| A | BAEK, Dae-Sung et al., "A Study on Physical Properties of MR Fluid by Chemical Composition", Journal of the Korea Academia-Industrial Cooperation Society, 2013, vol. 14, no. 10, pp. 4747-4752<br>See page 4750 and figures 10-12. | 1-10 |
| A | LEE, Seok-Hyun et al., "A Study on Physical Properties of MR Fluid by Chemical Composition", Journal of the Korea Academia-Industrial Cooperation Society, 2013, vol. 14, no. 8, pp. 3611-3616<br>See page 3612. | 1-10 |
| A | JP 2002-246221 A (NEC TOKIN CORP.) 30 August 2002<br>See paragraphs [0005], [0006] and claims 1, 2. | 1-10 |

☐ Further documents are listed in the continuation of Box C.   ☒ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 24 JULY 2017 (24.07.2017) | **25 JULY 2017 (25.07.2017)** |

| Name and mailing address of the ISA/KR | Authorized officer |
|---|---|
| Korean Intellectual Property Office<br>Government Complex-Daejeon, 189 Seonsa-ro, Daejeon 302-701, Republic of Korea | |
| Facsimile No. +82-42-481-8578 | Telephone No. |

Form PCT/ISA/210 (second sheet) (January 2015)

Form PCT/ISA/210 (patent family annex) (January 2015)

**INTERNATIONAL SEARCH REPORT**
Information on patent family members

International application No.

**PCT/KR2017/004627**

| Patent document cited in search report | Publication date | Patent family member | Publication date |
|---|---|---|---|
| KR 10-2008-0079472 A | 01/09/2008 | KR 10-0884305 B1 | 18/02/2009 |
| KR 10-2008-0112703 A | 26/12/2008 | KR 10-0932225 B1 | 16/12/2009 |
| JP 2002-246221 A | 30/08/2002 | NONE | |

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6203717 B1

- US 7297290 B2